(19) Europäisches Patentamt
European Patent Office
Office européen des brevets

(11) **EP 4 704 418 A1**

(12) **EUROPEAN PATENT APPLICATION**

(43) Date of publication:
04.03.2026 Bulletin 2026/10

(21) Application number: 24315391.3

(22) Date of filing: 27.08.2024

(51) International Patent Classification (IPC):
*H04N 19/11* (2014.01)  *H04N 19/176* (2014.01)
*H04N 19/593* (2014.01)  *H04N 19/70* (2014.01)

(52) Cooperative Patent Classification (CPC):
H04N 19/593; H04N 19/11; H04N 19/176;
H04N 19/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.**
**Beijing Beijing 100085 (CN)**

(72) Inventors:
• **Abdoli, Mohsen**
  **Beijing, 100085 (CN)**
• **Ghaznavi Youvalari, Ramin**
  **Beijing, 100085 (CN)**
• **Tissier, Alexandre**
  **Beijing, 100085 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS USING INTRA PREDICTION FUSION**

(57)     Provided is a method for decoding a picture from a data stream, comprising determining, based on a most probable mode syntax element signaled in the data stream, a principal intra-prediction mode out of a first set of intra prediction modes, forming a fused prediction signal for an intra-predicted block by fusing a first prediction signal obtained using the principal intra prediction mode and one or more second prediction signals obtained using one or more fusion intra prediction modes; reconstructing the intra-predicted block using the fused prediction signal.

```
┌─────────────────────────────────────────────────────────────┐
│ Determining a principal mode out of a first set of intra     │──── S102
│ prediction modes                                             │
└─────────────────────────────────────────────────────────────┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐  ──── S104
  determining one or more fusion modes out of a second set of
│ intra prediction modes                                     │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                            │
                            ▼                                     ──── S106
┌─────────────────────────────────────────────────────────────┐
│ forming a final prediction signal for the intra-predicted    │
│ block by fusing a first prediction signal obtained using the │
│ principal mode and one or more second prediction signals     │
│ obtained using the one or more fusion modes                  │
└─────────────────────────────────────────────────────────────┘
```

Fig. 6

## Description

Technical Field

The present disclosure generally relates to the field of encoding/decoding pictures, images or videos, and embodiments of the present disclosure concern improvements regarding a prediction. More specific embodiments of the present disclosure relate to a new intra prediction coding tool.

## Background

In the JVET document "Algorithm description of the Enhanced Compression Model (ECM)" [5], some intra prediction tools are described, which all serve in efficiently coding a picture block, namely:

- Decoder-side Intra Mode Derivation (DIMD)
- Template-based Intra Mode Derivation (TIMD)
- Occurence-based Intra Coding (OBIC)
- Spatial Geometric Partitioning Mode (SGPM)
- Matrix-based Intra Prediction (MIP)
- Intra Block Copy (IBC)
- IntraTmp
- Extrapolation Intra Prediction (EIP)

But there is still need for a further efficiency improvement.

## Summary

It is an object of the present disclosure, to provide a more efficient intra prediction .

This object is achieved by the subject matter of the claims.

It is a finding of the inventors that a more efficient intra prediction may be achieved by fusing, for an intra-predicted block for which a most probable mode syntax element is signaled in the data stream, a first prediction signal obtained using a principal intra prediction mode and one or more second prediction signals obtained using one or more fusion intra prediction modes.

Especially, the fact a most probable mode syntax element is signalled in the data stream for the intra predicted block, is indicative of a certain characteristic of the intra-predicted block, namely a characteristic which makes it qualified to gain advantage from an additional overhead associated with the fused intra prediction. In particular, the fact that the sending of a most probable mode syntax element has been deemed worthwhile for the intra-predicted block is indicative of a certain amount of similarity to the intra-predicted block's neighborhood from which a most probable mode is, for instance, determined, and this qualifies such an intra-predicted block a candidate for which the additional efforts associated with the fusion are overcompensated, such as additional efforts in terms of syntax element(s) controlling the fusion mode(s) and/or the fusion and/or in terms of rate distortion optimization.

The one or more fusion intra prediction modes may be selected depending on one or more of a) which principal intra prediction mode is determined out of the first set of intra-prediction modes, b) information on previously decoded blocks of the picture, and c) an analysis of a previously reconstructed portion within a spatial neighborhood of the intra-prediction block in the picture, so that the additional signalling overhead may be kept low. Additionally, one or more fusion mode syntax elements may be signalled in the data stream and used for selected one or more fusion intra prediction modes.

It is to be understood that the content described in this section is not intended to identify key or critical features of the embodiment of the present disclosure, nor is it intended to limit the scope of the present disclosure. Other features of the present disclosure become readily apparent from the following description.

Brief Description of the Drawings

The drawings are explanatory and serve to explain the present disclosure, and are not to be construed to limit the present disclosure to the illustrated embodiments.

Fig. 1 shows a block diagram of a conventional video encoder;
Fig. 2 shows a block diagram of a conventional video decoder;
Fig. 3 shows a flow or block diagram of an example concept for selecting a Fusion IPM relative to the principal IPM;

Fig. 4 shows a flow or block diagram of an example concept of using BV-based fusion mode for the fusion with the principal IPM;

Fig. 5 shows a flow or block diagram of a concept for implementing the fusion intra prediction coding tool at decoding side according to an embodiment;

Fig. 6 shows a flow or block diagram of a concept for implementing the prediction in the fusion intra prediction coding tool according to an embodiment;

Fig. 7 shows a data stream in accordance with embodiments of the present disclosure; and

Fig. 8 shows a block diagram illustrating an electronic device according to embodiments of the present disclosure.

Detailed Description of Embodiments

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

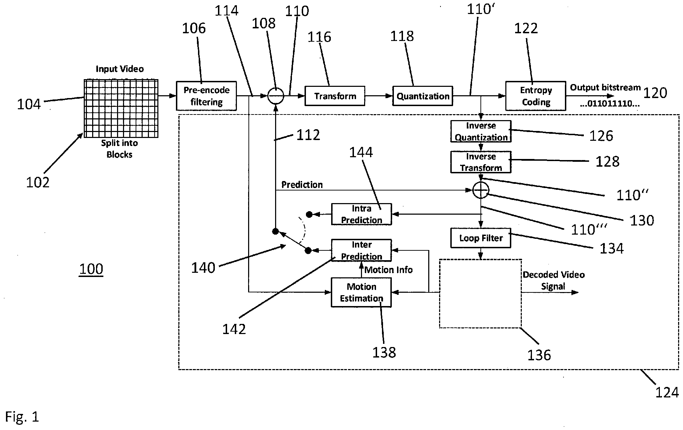

A block diagram of a standard video compression system 100 operating in accordance with the VVC standard is illustrated in Fig. 1. The standard video coder 100 compresses and encodes a picture. 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signalling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

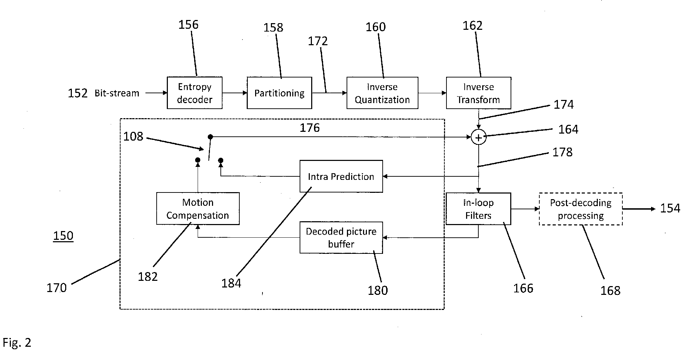

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motioncompensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

The encoder and decoder designs shown in Fig. 1 and 2 may be used to build the subsequently proposed embodiments thereinto.

In current design of ECM, when regular IPM is used as the coded mode of a CU, only a single mode can be used for the prediction of the block. This limitation keeps ECM using fusion for texture smoothing as in other fusion-based prediction modes (e.g. DIMD, OBIC, TIMD, SGPM etc.). This embodiments described below address this potential shortcoming by allowing multiple mode fusion when the regular IPM is selected for a CU.

According to embodiments of the proposed disclosure, the method for CUs that are coded by the so-called regular IPM tool, where the signalling includes at least one Most Probable Mode (MPM) flag, is modified. The modification allows at least one additional mode to be fused with the principal mode coded by the regular IPM coded CU. In other words, it is proposed that pixels of regular IPM coded CUs be predicted as fusion of A) one "principal IPM" that is coded using at least one MPM flag and B) at least one additional "fusion IPM" that is different from the principal IPM of the CU.

For the present disclosure, the abbreviation IPM (Intra Prediction Mode) is used to define a prediction mode provided by the codec that can be either angular or non-angular mode. For example, in VVC, the set of all 67 IPMs include two non-angular IPMs of DC and Planar, as well as 65 angular IPMs, covering 180 degrees of all angles.

A Regular IPM (RIPM) CU is a CU that uses IPM for its prediction and that IPM is signalled by using Most Probable Mode (MPM) and non-MPM list(s). In other words, an RIPM CU is in contrast with other CUs such as DIMD or TIMD, where even though those CUs use IPM(s), their signalling does not involve MPM and non-MPM lists. Instead, they have their own dedicated flags.

An RIPM CU in the state-of-the-art is therefore associated with exactly one IPM. In the description of the embodiments presented below, this IPM that is explicitly signalled for the RIPM CU, is referred to as the "principal mode" of that RIPM CU.

Here, according to embodiments described herein, new prediction mode(s) are introduced for each RIPM CUs. This (these) mode(s) is (are) referred to as "fusion mode" of that RIPM CU.

The methods of embodiments described herein are called Fusion Regular IPM, or, using different words, relate to a fusion intra prediction coding tool, that can be applied only on RIPMs. Correspondingly, an RIPM CU that uses the proposed method is called Fusion RIPM or in short, an FRIPM CU. Conversely, an RIPM CU that does not use the proposed methods, is called a Non-Fusion RIPM or an NFRIPM CU.

According to a embodiments, FRIPM CUs use at least one fusion mode, in addition to their principal modes. As a result, the prediction process of an FRIPM CU includes:

Prediction using the principal mode (that has to be an IPM, according to the previous section) and obtaining a principal prediction signal noted as:

$$P_{princ}$$

1. Prediction using one or more fusion modes and obtaining a set of fusion prediction signals, noted as:

$$P^1_{fusion}, \ P^2_{fusion}, \cdots$$

2. Applying a prediction fusion on the principal prediction signal and the fusion prediction signals in order to compute a final prediction signal as:

$$P_{final} = Fusion(P_{princ}, \ P^1_{fusion}, \ P^2_{fusion}, \cdots)$$

Below, for the sake of simplicity, we assume that there exists only one fusion mode. However, without loss of generality, one can extend all aspects to more than one fusion IPM.

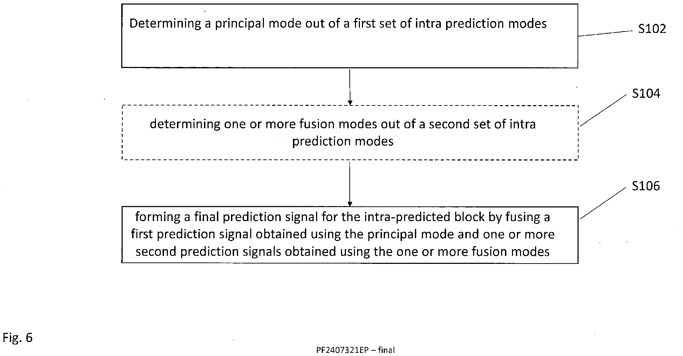

That is, according to an embodiment illustrated in Fig. 6, the decoder, in decoding a picture from a data stream, decodes an intra-predicted block using a fusion intra prediction coding tool by determining S 102 a principal intra-prediction mode out of a first set of intra prediction modes, determining S104 one or more fusion modes out of a second set of intra prediction modes and forming S106 a final prediction signal for the intra-predicted block by fusing a first prediction signal obtained using the principal intra prediction mode and one or more second prediction signals obtained using the one or more fusion intra prediction modes. While the decoder reconstructs the intra-predicted block using the final prediction signal, namely by correcting the final prediction signal using a prediction residual signalled in the data stream for intra-predicted block, the encoder encodes the intra-predicted block using the final prediction signal, namely determining the prediction residual so that same corrects the final prediction signal and encoding same into the data stream for then intra-predicted block. Step S 104 is optional, as will become clear from the following description. The one or more fusion modes used in step S 106 might be fixed by default at decoder and encoder.

The choice of fusion mode can be made differently. In particular, a fusion mode can be either itself an IPM (e.g. one of 67 IPMs of VVC), or a non-IPM.

That is, the second set of intra prediction modes from which the fusion mode(s) is/are selected may include the first set of intra prediction modes from which a principal mode is selected, or a subset thereof, and additionally comprise one or more further intra-prediction modes. However, alternatively, the first and second sets of intra-prediction modes might be disjoint or merely a proper subset of intra-prediction modes out of the first set might be included in the second set. Even alternatively, the second set may equal the first set.

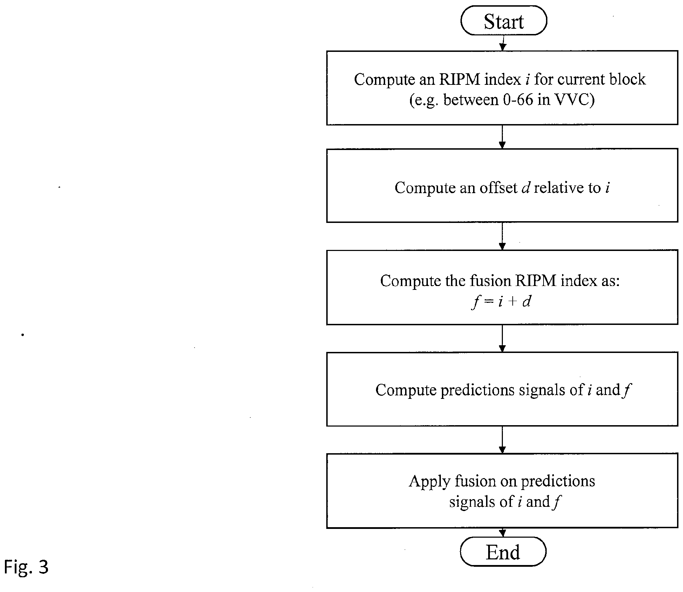

In the IPM-based category, where fusion mode is itself an IPM, the decision of what IPM to choose can be made differently. First example of the IPM-based fusion mode is to choose an IPM that is defined relative to the principal mode IPM (e.g. with an offset index). This example is depicted in Fig. 3. Second example of the IPM-based fusion mode is to choose an IPM based on available information from neighboring CUs that have already been coded. The second example also includes using TIMD (Template-based Intra Mode Derivation) or DIMD (Decoder-side Intra Mode Derivation) methods to derive an IPM as the fusion mode. Third example of IPM-based fusion mode selection is to always choose a constant (i.e. hardcoded by the specification) IPM (e.g. Planar mode).

That is, in one embodiment, the second set of intra-prediction modes equals the first set of intra-prediction modes or a proper subset of the latter, and the determining the one or more fusion intra prediction modes out of the second set of intra prediction modes may be performed depending on one or more of, which principal intra prediction mode is determined out of the first set of intra-prediction modes, information on previously decoded blocks of the picture, and/or an analysis of a previously reconstructed portion within a spatial neighbourhood of the intra-prediction block in the picture, but the dependencies could also be used if the second set if defined differently, i.e. comprises one or more intra-prediction modes outside the first set.

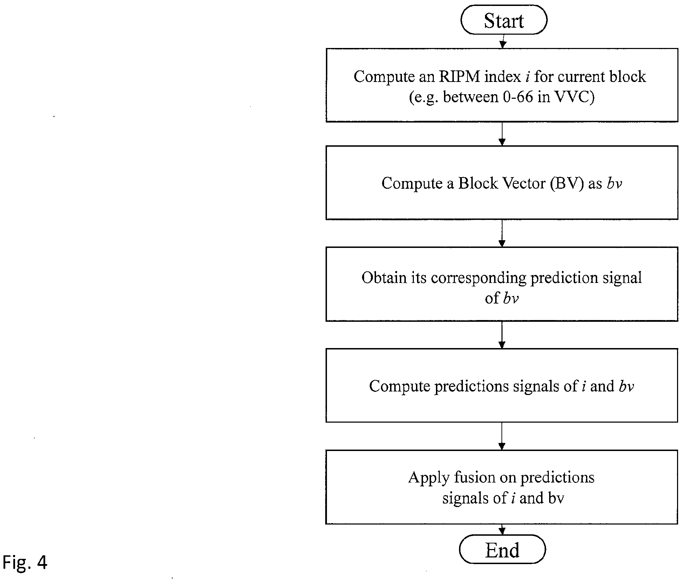

In the non-IPM-based category, where fusion mode is not an IPM, the decision about the prediction mode can be made differently. First example of the non-IPM-based fusion mode is to choose a BV-based prediction mode, such as in IBC (Intra Block Copy) or IntraTmp (Intra Template-based). This example is illustrated in Fig. 4. Second example of the non-IPM-based fusion mode is to use the MIP mode (Matrix-based Intra Prediction) fusion mode. Third example of the non-IPM-based fusion mode is to use an EIP mode (Extrapolation Intra Prediction) as fusion mode.

Alternatively, it is possible for an FRIPM to have several fusion modes, consisting of a combination of IPM-based and non-IPM-based fusion modes. For the choice of IPM-based and non-IPM-based fusion modes, same options as above are available.

Given a principal mode and at least one fusion mode, different fusion methods can be used to combine the individual prediction signal of each mode in order to provide the final prediction signal of an FRIPM CU, i.e. to fuse them.

First example of fusion method is fixed linear weighting. In this method, a set of pre-defined scalars $\omega_i\, i = 1,2, ...$ and a possibly a bias $\beta$ are used to linearly combine the predictions by their weighted sum:

$$Fusion\left(P_{princ}, P^1_{fusion}, P^2_{fusion}, ...\right) = \omega_1 P_{princ} + \omega_2\, P^1_{fusion} + \omega_3\, P^2_{fusion} + \cdots + \beta$$

Second example of fusion method is adaptive linear weighting. In this method, similar to previous method, a linear combination of the individual prediction signals is used for the fusion. However, the weights are adaptively computed for each CU. For instance, one can use the template cost of each mode to determine its fusion weight.

The signalling aspect of the proposed method involves two sub-aspects: CU-level signalling for the usage of the proposed algorithm, and signalling for the choice of fusion mode(s).

The use of the fusion intra prediction tool can be controlled in the High-Level Syntax (HLS) such as Sequence Parameters Set (SPS), Picture Parameters Set (PPS) etc. To this end, a flag is added to enable or disable the fusion intra prediction tool for the whole sequence or picture, respectively.

As to the signalling of the tool in the CU-level, its use might be signalled explicitly or implicitly.

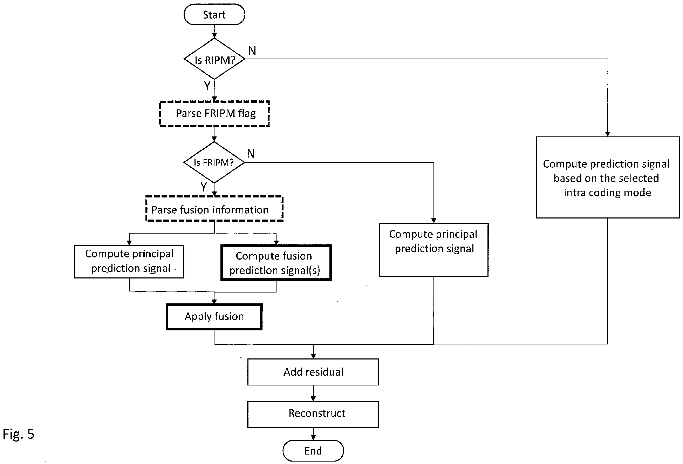

In explicit mode, each RIPM carries a flag to indicate whether it is a FRIPM or NFRIPM. In this mode, it is possible to enable the enable the proposed method, i.e. the fusion intra prediction, only for a subset of all RIPMs and signal the flag only for those. For example, this constraint can be based on the block size. Fig. 5 illustrates this explicit mode.

Alternatively, in implicit mode, no flag is carried in the CU and to determine whether and RIPM is FRIPM or an NFRIPM, available information at the decoder side is taken into account. First example of how to implicitly choose between FRIPM and NFRIPM is to use the template cost. In this approach, the fusion using the same principal, and fusion modes is applied on the template around the current CU and a template cost is computed. Moreover, the template cost of only the principal mode is computed. If the fusion cost is lower than a certain threshold of the principal cost, then the block is coded as FRIPM. A second example of implicit usage of the proposed method is to always enable it for blocks that meet certain requirements, such as block size etc.

As to the question of how to signal the fusion mode for FRIPM CUs, several options exist. That is, when a CU is coded as FRIPM, the decoder should determine its fusion mode. There are two approaches to do so.

In first approach, the fusion mode is also be explicitly signalled. In other words, at least one syntax element is parsed for determining what fusion mode should be used for current FRIPM CU. That is, fusion information could be present the data stream for those blocks for which the fusion mode is determined to be used as also illustrated as optional in Fig. 5. The syntax element used to this end could be used differently to determine the fusion mode. In first example of this approach, the syntax element can be a signed index that is relative to the IPM index of the principal mode and is to be added to it in order to derive the fusion mode. In second example of this approach, the syntax element is a flag or index indicating one of possible sources of deriving the fusion mode (e.g. source 1: TIMD, source 2: DIMD etc.). It is useful to note that the explicit approach is applicable only when the CU-level flag for the use of the proposed method is present (as described above).

In second approach, the fusion mode is derived implicitly, meaning that it derivation is not associated with any syntax elements. Therefore, it can be applied to both explicit and implicit modes described above. In this approach, to derive the fusion mode, available information from neighbouring CUs that have already been decoded could be used. This information could be related to the prediction mode or reconstructed pixels of those neighbouring CUs. Furthermore, the implicitly derived fusion mode can be either computed relative to the principal mode, or computed independently from the principal mode.

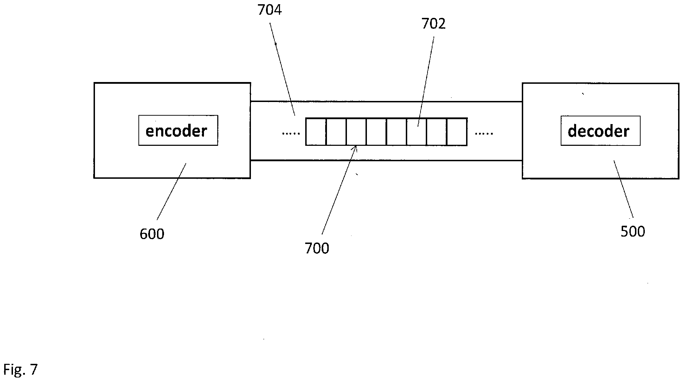

Fig. 7 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream might include information 702, which is encoded into the data stream by the encoder 600, with this information controlling the fusion mode as discussed above, i.e. this information may activate the fusion mode for a certain block, and/or may select the fusion mode for this block is the fusion mode is activated, and/or may control the fusion itself for this block if the fusion mode is activated.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

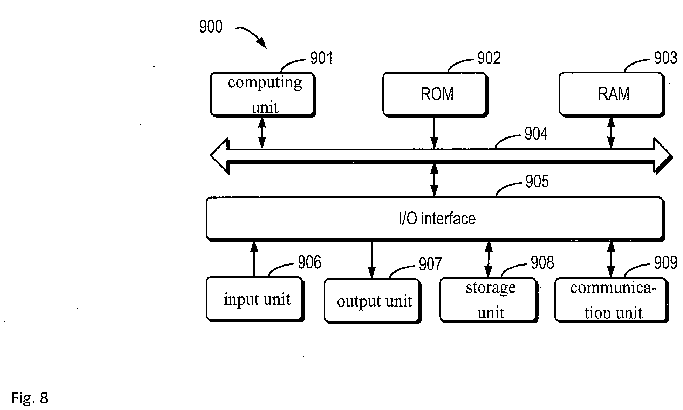

Fig. 8 is a block diagram illustrating an electronic device 900 according to embodiments of the present disclosure.

The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Summarizing the above, the following embodiments are derivable from above description.

In an embodiment, an intra CU which is coded using Most Probable Mode (MPM) flag, uses one regular IPM (e.g., among 67 IPMs in VVC) as the principal mode, along with at least one fusion mode. Then, the final prediction of the CU is computed by fusing the prediction signal from the principal mode and the prediction signal(s) from the fusion mode(s).

The fusion mode may be IPM-based, meaning that it has been selected among available IPMs (e.g. 67 IPMs in VVC), i.e. out of the first set of intra prediction modes.

The IPM-based fusion mode may be computed or selected relative to the index of the principal mode.

The IPM-based fusion mode may be computed or selected based on the available information in the neighborhood.

The computation or selection based on the available neighborhood consists of a template processing step.

The fusion mode may be non-IPM-based, meaning that it has not been selected among the regular IPMs (e.g. 67 IPMs in VVC).

The non-IPM-based fusion mode may be a mode that requires a Block Vector (BV) for computing the prediction signal.

The BV-based non-IPM-based fusion mode may be IntraTmp mode.

The BV-based non-IPM-based fusion mode may be Intra Block Copy (IBC).

The non-IPM-based fusion mode may use Matrix-based Intra Prediction (MIP) for computing the prediction signal.

The non-IPM-based fusion mode may use Extrapolation-based Intra Prediction (EIP) for computing the prediction signal.

There may be both IPM-based and non-IPM-based prediction modes among the fusion modes.

As to the fusion, the fusion process may be carried out by a linear combination of individual prediction signals, including the principal mode's prediction signal, as well as fusion modes' prediction signals.

The weights of the linear combination of prediction signals may be constant for all CUs.

The weights of the linear combination of prediction signals may be adapted for different CUs. As noted above, the template cost of each mode might be used to determine its fusion weight.

As to the signaling, a High-Level Syntax (HLS) such as SPS or PPS flag may be signalled to indicate whether the above prediction fusion is used in the coded video/image. An example syntax portion out of a SPS syntax is shown hereinbelow:

|  | Descriptor |
|---|---|
| ... |  |
| **sps_isp_enabled_flag** | **u(1)** |
| **sps_mrl_enabled_flag** | **u(1)** |
| **sps_mip_enabled_flag** | **u(1)** |
| **sps_fripm_enabled_flag** | **u(1)** |

(continued)

|  | Descriptor |
|---|---|
| ... |  |
|  |  |

A CU-level flag may be signalled for a regular IPM coded CU to indicate whether or not it uses the above prediction fusion method.

The CU-level flag may only be signalled for a subset of regular IPM coded CUs, depending on a condition such as CU size etc.

When a CU is determined to use the above prediction fusion method, CU-level information may be signalled to indicate the choice of fusion mode(s) of the CU.

Further embodiments encompass the following ones, each of which is combinable with one or more of the details set out above.

A 1st embodiment provides a method for decoding a picture from a data stream, comprising

determining, based on a most probable mode syntax element signaled in the data stream, a principal intra-prediction mode out of a first set of intra prediction modes,

forming a fused prediction signal for an intra-predicted block by fusing a first prediction signal obtained using the principal intra prediction mode and one or more second prediction signals obtained using one or more fusion intra prediction modes;

reconstructing the intra-predicted block using the fused prediction signal.

A 2nd embodiment provides the method of the 1st embodiment, wherein the first set of intra prediction modes comprises directional intra-prediction modes.

A 3rd embodiment provides the method of the 1st to 2nd embodiment, wherein the determining, based on the most probable mode syntax element signaled in the data stream, the principal intra-prediction mode out of the first set of intra prediction modes, comprises

determining one or more most probable intra prediction modes out of the first set of intra prediction modes, wherein the principle intra prediction mode is one of the one or more most probable intra prediction modes, or decoding an index for the intra-predicted block from the data stream, the index pointing into a subset of least-probable intra prediction modes out of the the one or more most probable intra prediction modes and determining the principle mode out of the less-probable intra prediciton modes using the index.

A 4th embodiment provides the method of any one of the preceding embodiments, wherein the determining, based on the most probable mode syntax element signaled in the data stream, the principal intra-prediction mode out of the first set of intra prediction modes, further comprises
determining, based on the most probable mode syntax element, whether the principle intra prediction mode shall be one of the one or more most probable intra prediction modes, or whether the principle intra prediction mode shall be one of the first set of intra prediction modes, other than the one or more most probable intra prediction modes.

A 5th embodiment provides the method of any one of the preceding embodiments, comprising, in determining the principal intra prediction mode out of the first set of intra prediction modes,

determinig, based on the most probable mode syntax element, whether the principle intra prediction mode shall be one of one or more most probable intra prediction modes, or whether the principle intra prediction mode shall be one of the first set of intra prediction modes, other than the one or more most probable intra prediction modes, and

if the principle intra prediction mode shall be one of the one or more most probable intra prediction modes, determining the one or more most probable intra prediction modes out of the first set of intra prediction modes, wherein the principle intra prediction mode is one of the one or more most probable intra prediction modes, and

if the principle intra prediction mode shall be one of the first set of intra prediction modes,

decoding an index for the intra-predicted block from the data stream, the index pointing into a subset of least-probable intra prediction modes out of the the one or more most probable intra prediction modes and determining the principle mode out of the less-probable intra prediciton modes using the index.

A 6th embodiment provides the method of any one of the preceding embodiments, further comprising determining the one or more fusion intra prediction modes out of a second set of one or more intra prediction modes, wherein the second set of one or more intra prediction modes

a) includes the first set of intra prediction modes, or a subset thereof, and comprises one or more further intra-prediction modes, or
b) is disjoint relative to the first set of intra prediction modes, or
c) equals a proper subset of intra prediction modes out of the first set of intra prediction modes or equals the first set of intra prediction modes.

A 7th embodiment provides the method of the 6th embodiment, wheren the determining the one or more fusion intra prediction modes out of the second set of intra prediction modes is performed depending on one or more of

a) which principal intra prediction mode is determined out of the first set of intra-prediction modes,
b) information on previously decoded blocks of the picture,
c) an analysis of a previously recontructed portion within a spatial neighborhood of the intra-prediction block in the picture, and
d) one or more fusion mode syntax elements.

A 8th embodiment provides the method of any one of the preceding embodiments, wherein the one or more fusion intra prediction modes comprises one or more of

a) a block vector (BV) based prediction mode,
b) an IntraTmp (Intra Template-based) prediction mode,
c) a MIP (Matrix-based Intra Prediction) prediction mode,
d) an EIP mode (Extrapolation Intra Prediction) prediction mode.

A 9th embodiment provides the method of any one of the preceding embodiments, wherein the method comprises switching, for each of a set of predetermined intra-predicted blocks, between

determining, based on the most probable mode syntax element signaled in the data stream for the respective predetermined intra predicted block, a principal intra-prediction mode out of the first set of intra prediction modes,

forming a fused prediction signal for the respective predetermined intra-predicted block by fusing a first prediction signal obtained using the principal intra prediction mode and one or more second prediction signals obtained using one or more fusion intra prediction modes;

reconstructing the respective predetermined intra-predicted block using the fused prediction signal, and

determining, based on the most probable mode syntax element signaled in the data stream for the respective predetermined intra predicted block, a principal intra-prediction mode out of the first set of intra prediction modes, and

decoding the respective predetermined intra-predicted block using the principal intra-prediction mode.

A 10th embodiment provides the method of the 9th embodiment, wherein the set of predetermined intra-predicted blocks is formed by

intra-predicted blocks for which a most probable mode syntax element is signalled in the data stream, or intra-predicted blocks, for which a most probable mode syntax element is signalled in the data stream, which indicates the use of a most probable intra prediction mode.

wherein the switching depends on one or more

a) characteristics of the respective predetermined intra-prediction block
b) a syntax element signalled in the data stream for the respective predetermined intra-prediction block
c) an analysis performed on a template area in a spatial neighbourhood of the intra-predicted block by checking which among predicting the template 1) using a fused prediction test signal for the template area formed by using a first prediction test signal obtained using the principal intra prediction mode and one or more second prediction test signals obtained using the one or more fusion intra prediction modes and 2) using the first prediction test signal is more effective.

An 11th embodiment provides the method of any one of the preceding embodiments, wherein the fused prediction signal is formed by one or more of

a) a weighted sum with default weights,
b) a weighted sum with weights among which at least one is signalled in the data stream for the intra-predicted block, and
c) a weighted sum with weights among which at least one is implicitly derived for the intra-predicted block based on a previously decoded portion of the data stream.

A 12th embodiment provides the method of any one of the preceding embodiments, comprising for each of a set of intra-predicted blocks for which a most probable mode syntax element is signalled in the data stream (e.g. determining whether the respective intra-predicted block belongs to this set is done based on a corresponding syntax element for the respective intra predicted block in the data stream or based on other information such as by means of analyzing an already de/coded neighborhood of the respective intra-predicted block),

decoding the most probable mode syntax element and a fusion mode syntax element from the data stream for the respective intra predicted block,

if the fusion mode syntax element is indicative of a fused intra prediction,

determining, based on the most probable mode syntax element signaled in the data stream for the respective intra predicted block, the principal intra-prediction mode out of the first set of intra prediction modes,

forming a fused prediction signal for the respective intra-predicted block by fusing a first prediction signal obtained using the principal intra prediction mode and one or more second prediction signals obtained using one or more fusion intra prediction modes;

reconstructing the respective intra-predicted block using the fused prediction signal,

if the fusion mode syntax element is not indicative of the fused intra prediction,

determining, based on the most probable mode syntax element signaled in the data stream for the respective intra predicted block, a principal intra-prediction mode out of the first set of intra prediction modes, and

decoding the respective intra-predicted block using the principal intra-prediction mode.

A 13th embodiment provides the method of any one of the preceding embodiments, wherein the intra-prediction block belongs to a set of intra-predicted blocks for which a most probable mode syntax element is signalled in the data stream, and the method comprises, for each of the set of intra-predicted blocks, decoding the most probable mode syntax element and a fusion mode syntax element from the data stream for the respective intra predicted block, and

determining, based on the most probable mode syntax element signaled in the data stream for the respective intra predicted block, a principal intra-prediction mode out of the first set of intra prediction modes,

forming a fused prediction signal for the respective intra-predicted block by fusing a first prediction signal obtained using the principal intra prediction mode and one or more second prediction signals obtained using one or more fusion intra prediction modes;

reconstructing the respective intra-predicted block using the fused prediction signal,
or

determining, based on the most probable mode syntax element signaled in the data stream for the respective intra predicted block, a principal intra-prediction mode out of the first set of intra prediction modes, and

decoding the respective intra-predicted block using the principal intra-prediction mode.

A 14th embodiment provies a method for encoding a picture into a data stream, comprising

determining, based on a most probable mode syntax element signaled in the data stream, a principal intra-prediction mode out of a first set of intra prediction modes,

forming a fused prediction signal for an intra-predicted block by fusing a first prediction signal obtained using the principal intra prediction mode and one or more second prediction signals obtained using one or more fusion intra prediction modes;

encoding the intra-predicted block using the fused prediction signal.

A 15th embodiment provides the method of the 14th embodiment, wherein the first set of intra prediction modes comprises directional intra-prediction modes.

A 16th embodiment provides the method of the 14th to 15th embodiment, wherein the determining, based on the most probable mode syntax element signaled in the data stream, the principal intraprediction mode out of the first set of intra prediction modes, comprises

determining one or more most probable intra prediction modes out of the first set of intra prediction modes, wherein the principle intra prediction mode is one of the one or more most probable intra prediction modes, or encoding an index for the intra-predicted block into the data stream, the index pointing into a subset of least-probable intra prediction modes out of the the one or more most probable intra prediction modes and determining the principle mode out of the less-probable intra prediciton modes using the index.

A 17th embodiment provides the method of the 14th to 16th embodiments, wherein the determining, based on the most probable mode syntax element signaled in the data stream, the principal intra-prediction mode out of the first set of intra prediction modes, further comprises
determining, based on the most probable mode syntax element, whether the principle intra prediction mode shall be one of the one or more most probable intra prediction modes, or whether the principle intra prediction mode shall be one of the first set of intra prediction modes, other than the one or more most probable intra prediction modes.

An 18th embodiment provides the method of the 14th to 17th embodiments, comprising, in determining the principal intra prediction mode out of the first set of intra prediction modes,

determinig, based on the most probable mode syntax element, whether the principle intra prediction mode shall be one of one or more most probable intra prediction modes, or whether the principle intra prediction mode shall be one of the first set of intra prediction modes, other than the one or more most probable intra prediction modes, and

if the principle intra prediction mode shall be one of the one or more most probable intra prediction modes, determining the one or more most probable intra prediction modes out of the first set of intra prediction modes, wherein the principle intra prediction mode is one of the one or more most probable intra prediction modes, and

if the principle intra prediction mode shall be one of the first set of intra prediction modes, encoding an index for the intra-predicted block into the data stream, the index pointing into a subset of least-probable intra prediction modes out of the the one or more most probable intra prediction modes and

determining the principle mode out of the less-probable intra prediciton modes using the index.

A 19th embodiment provides the method of 14th to 18th embodiments, further comprising

determining the one or more fusion intra prediction modes out of a second set of one or more intra prediction modes, wherein the second set of one or more intra prediction modes

a) includes the first set of intra prediction modes, or a subset thereof, and comprises one or more further intra-prediction modes, or

b) is disjoint relative to the first set of intra prediction modes, or

c) equals a proper subset of intra prediction modes out of the first set of intra prediction modes or equals the first set of intra prediction modes.

A 20th embodiment provides the method of the 19th embodiment, wheren the determining the one or more fusion intra prediction modes out of the second set of intra prediction modes is performed depending on one or more of

a) which principal intra prediction mode is determined out of the first set of intra-prediction modes,

b) information on previously encoded blocks of the picture,

c) an analysis of a previously recontructed portion within a spatial neighborhood of the intra-prediction block in the picture, and

d) one or more fusion mode syntax elements.

A 21st embodiment provides the method of the 14th to 20th embodiments, wherein the one or more fusion intra prediction modes comprises one or more of

a) a block vector (BV) based prediction mode,

b) an IntraTmp (Intra Template-based) prediction mode,

c) a MIP (Matrix-based Intra Prediction) prediction mode,

d) an EIP mode (Extrapolation Intra Prediction) prediction mode.

A 22nd embodiment provides the method of the 14th to 21st embodiments, wherein the method comprises switching, for each of a set of predetermined intra-predicted blocks, between

determining, based on the most probable mode syntax element signaled in the data stream for the respective predetermined intra predicted block, a principal intra-prediction mode out of the first set of intra prediction modes,

forming a fused prediction signal for the respective predetermined intra-predicted block by fusing a first prediction signal obtained using the principal intra prediction mode and one or more second prediction signals obtained using one or more fusion intra prediction modes;

reconstructing the respective predetermined intra-predicted block using the fused prediction signal, and

determining, based on the most probable mode syntax element signaled in the data stream for the respective predetermined intra predicted block, a principal intra-prediction mode out of the first set of intra prediction modes, and

encoding the respective predetermined intra-predicted block using the principal intra-prediction mode.

A 23rd embodiment provides the method of the 22nd embodiment,

wherein the set of predetermined intra-predicted blocks is formed by

intra-predicted blocks for which a most probable mode syntax element is signalled in the data stream, or intra-predicted blocks, for which a most probable mode syntax element is signalled in the data stream, which indicates the use of a most probable intra prediction mode.

wherein the switching depends on one or more

a) characteristics of the respective predetermined intra-prediction block

b) a syntax element signalled in the data stream for the respective predetermined intra-prediction block

c) an analysis performed on a template area in a spatial neighbourhood of the intra-predicted block by checking which among predicting the template 1) using a fused prediction test signal for the template area formed by using a first prediction test signal obtained using the principal intra prediction mode and one or more second prediction test signals obtained using the one or more fusion intra prediction modes and 2) using the first prediction test signal is more effective.

A 24th embodiment provides the method of the 14th to 23rd embodiments, wherein the fused prediction signal is formed by one or more of

a) a weighted sum with default weights,
b) a weighted sum with weights among which at least one is signalled in the data stream for the intra-predicted block, and
c) a weighted sum with weights among which at least one is implicitly derived for the intra-predicted block based on a previously encoded portion of the data stream.

A 25th embodiment provides the method of any one of the 14th to 24th embodiments, comprising

for each of a set of intra-predicted blocks for which a most probable mode syntax element is signalled in the data stream (e.g. determining whether the respective intra-predicted block belongs to this set is done based on a corresponding syntax element for the respective intra predicted block in the data stream or based on other information such as by means of analyzing an already de/coded neighborhood of the respective intra-predicted block),

encoding the most probable mode syntax element and a fusion mode syntax element into the data stream for the respective intra predicted block,

if the fusion mode syntax element is indicative of a fused intra prediction,

determining, based on the most probable mode syntax element signaled in the data stream

for the respective intra predicted block, the principal intra-prediction mode out of the first set of intra prediction modes,

forming a fused prediction signal for the respective intra-predicted block by fusing a first prediction signal obtained using the principal intra prediction mode and one or more second prediction signals obtained using one or more fusion intra prediction modes;

reconstructing the respective intra-predicted block using the fused prediction signal,

if the fusion mode syntax element is not indicative of the fused intra prediction,

determining, based on the most probable mode syntax element signaled in the data stream for the respective intra predicted block, a principal intra-prediction mode out of the first set of intra prediction modes, and

encoding the respective intra-predicted block using the principal intra-prediction mode.

A 26th embodiment provides the method of the 14th to 25th embodiments, wherein the intra-prediction block belongs to a set of intra-predicted blocks for which a most probable mode syntax element is signalled in the data stream, and the method comprises, for each of the set of intra-predicted blocks,
encoding the most probable mode syntax element and a fusion mode syntax element into the data stream for the respective intra predicted block, and

determining, based on the most probable mode syntax element signaled in the data stream for the respective intra predicted block, a principal intra-prediction mode out of the first set of intra prediction modes,

forming a fused prediction signal for the respective intra-predicted block by fusing a first prediction signal obtained using the principal intra prediction mode and one or more second prediction signals obtained using one or more fusion intra prediction modes;

reconstructing the respective intra-predicted block using the fused prediction signal,

or

determining, based on the most probable mode syntax element signaled in the data stream for the respective intra predicted block, a principal intra-prediction mode out of the first set of intra prediction modes, and

encoding the respective intra-predicted block using the principal intra-prediction mode.

A 27th embodiment provides an apparatus for decoding a picture from a data stream, comprising:

a principal intra-prediction mode determination module configured to determine, based on a most probable mode syntax element signaled in the data stream, a principal intra-prediction mode out of a first set of intra prediction modes,

a fused prediction signal forming module configured to form a fused prediction signal for an intra-predicted block by fusing a first prediction signal obtained using the principal intra prediction mode and one or more second prediction signals obtained using one or more fusion intra prediction modes;

an intra-predicted block reconstructing module configured to reconstruct the intra-predicted block using the final prediction signal.

A 28h embodiment provides an apparatus for encoding a picture into a data stream, comprising:

a principal intra-prediction mode determination module configured to determine, based on a most probable mode syntax element signaled in the data stream, a principal intra-prediction mode out of a first set of intra prediction modes,

a fused prediction signal forming module configured to form a final prediction signal for an intra-predicted block by fusing a first prediction signal obtained using the principal intra prediction mode and one or more second prediction signals obtained using one or more fusion intra prediction modes;

an intra-predicted block encoding module configured to encode the intra-predicted block using the final prediction signal

A 29th embodiment provides a data stream having encoded thereinto a picture, wherein the data stream is encoded using a method of the 13th embodiment.

**List of Abbreviations**

| | |
|---|---|
| AVC | ISO/IEC 14496-10 Advanced Video Coding (AVC) / ITU-T Rec. H.264 [1] |
| EVC | ISO/IEC 23094-1 Essential video coding (EVC) |
| HEVC | ISO/IEC 23008-2 High Efficiency Video Coding (HEVC) / ITU-T Rec. H.265 [2] |
| VVC | ISO/IEC 23090-3 Versatile Video Coding (VVC) / ITU-T Rec. H.266 [3] |
| AV1 | AOMedia Video 1 (AV1) |

**References**

[1] H.264: Advanced video coding for generic audiovisual services, https://www.itu.int/rec/T-REC-H.264-202108-P/en

[2] H.265: High efficiency video coding, https://www.itu.int/rec/T-REC-H.265-202108-P/en

[3] H.266: Versatile video coding, https://www.itu.int/rec/T-REC-H.266-202008-I/en

[4] AV1 Bitstream & Decoding Process Specification, http://aomedia.org/av1/specification/

[5] Algorithm description of Enhanced Compression Model 13 (ECM 13), document JVET-AH2025, https://jvet-ex

perts.org/doc end user/documents/33 Teleconference/wg11/JVET-AG2025-v1.zip

**Claims**

1. Method for decoding a picture from a data stream, comprising

   determining, based on a most probable mode syntax element signaled in the data stream, a principal intra-prediction mode out of a first set of intra prediction modes,
   forming a fused prediction signal for an intra-predicted block by fusing a first prediction signal obtained using the principal intra prediction mode and one or more second prediction signals obtained using one or more fusion intra prediction modes;
   reconstructing the intra-predicted block using the fused prediction signal.

2. Method according to claim 1, wherein the first set of intra prediction modes comprises directional intra-prediction modes.

3. Method according to any of claims 1 to 2, wherein the determining, based on the most probable mode syntax element signaled in the data stream, the principal intra-prediction mode out of the first set of intra prediction modes, comprises

   determining one or more most probable intra prediction modes out of the first set of intra prediction modes, wherein the principle intra prediction mode is one of the one or more most probable intra prediction modes, or decoding an index for the intra-predicted block from the data stream, the index pointing into a subset of least-probable intra prediction modes out of the the one or more most probable intra prediction modes and determining the principle mode out of the less-probable intra prediciton modes using the index.

4. Method according to any of claim 1 to 3, wherein the determining, based on the most probable mode syntax element signaled in the data stream, the principal intra-prediction mode out of the first set of intra prediction modes, further comprises
   determining, based on the most probable mode syntax element, whether the principle intra prediction mode shall be one of the one or more most probable intra prediction modes, or whether the principle intra prediction mode shall be one of the first set of intra prediction modes, other than the one or more most probable intra prediction modes.

5. Method according to any of the previous claims, further comprising
   determining the one or more fusion intra prediction modes out of a second set of one or more intra prediction modes, wherein the second set of one or more intra prediction modes

   a) includes the first set of intra prediction modes, or a subset thereof, and comprises one or more further intra-prediction modes, or
   b) is disjoint relative to the first set of intra prediction modes, or
   c) equals a proper subset of intra prediction modes out of the first set of intra prediction modes or equals the first set of intra prediction modes.

6. Method according to claim 5, wheren the determining the one or more fusion intra prediction modes out of the second set of intra prediction modes is performed depending on one or more of

   a) which principal intra prediction mode is determined out of the first set of intra-prediction modes,
   b) information on previously decoded blocks of the picture,
   c) an analysis of a previously recontructed portion within a spatial neighborhood of the intra-prediction block in the picture, and
   d) one or more fusion mode syntax elements.

7. Method according to any of claims 1 to 6, wherein the one or more fusion intra prediction modes comprises one or more of

   a) a block vector (BV) based prediction mode,
   b) an IntraTmp (Intra Template-based) prediction mode,
   c) a MIP (Matrix-based Intra Prediction) prediction mode,

d) an EIP mode (Extrapolation Intra Prediction) prediction mode.

8. Method according to any of previous claims 1 to 7, wherein the method comprises switching, for each of a set of predetermined intra-predicted blocks, between

determining, based on the most probable mode syntax element signaled in the data stream for the respective predetermined intra predicted block, a principal intra-prediction mode out of the first set of intra prediction modes, forming a fused prediction signal for the respective predetermined intra-predicted block by fusing a first prediction signal obtained using the principal intra prediction mode and one or more second prediction signals obtained using one or more fusion intra prediction modes;
reconstructing the respective predetermined intra-predicted block using the fused prediction signal, and
determining, based on the most probable mode syntax element signaled in the data stream for the respective predetermined intra predicted block, a principal intra-prediction mode out of the first set of intra prediction modes, and
decoding the respective predetermined intra-predicted block using the principal intra-prediction mode.

9. Method according to claim 8,

wherein the set of predetermined intra-predicted blocks is formed by

intra-predicted blocks for which a most probable mode syntax element is signalled in the data stream, or intra-predicted blocks, for which a most probable mode syntax element is signalled in the data stream, which indicates the use of a most probable intra prediction mode.

wherein the switching depends on one or more

a) characteristics of the respective predetermined intra-prediction block
b) a syntax element signalled in the data stream for the respective predetermined intra-prediction block
c) an analysis performed on a template area in a spatial neighbourhood of the intra-predicted block by checking which among predicting the template 1) using a fused prediction test signal for the template area formed by using a first prediction test signal obtained using the principal intra prediction mode and one or more second prediction test signals obtained using the one or more fusion intra prediction modes and 2) using the first prediction test signal is more effective.

10. Method of any of claim 1 to 9, wherein the fused prediction signal is formed by one or more of

a) a weighted sum with default weights,
b) a weighted sum with weights among which at least one is signalled in the data stream for the intra-predicted block, and
c) a weighted sum with weights among which at least one is implicitly derived for the intra-predicted block based on a previously decoded portion of the data stream.

11. Method according to any of claims 1 to 10, wherein the intra-prediction block belongs to a set of intra-predicted blocks for which a most probable mode syntax element is signalled in the data stream, and the method comprises, for each of the set of intra-predicted blocks,
decoding the most probable mode syntax element and a fusion mode syntax element from the data stream for the respective intra predicted block, and

determining, based on the most probable mode syntax element signaled in the data stream for the respective intra predicted block, a principal intra-prediction mode out of the first set of intra prediction modes,
forming a fused prediction signal for the respective intra-predicted block by fusing a first prediction signal obtained using the principal intra prediction mode and one or more second prediction signals obtained using one or more fusion intra prediction modes;
reconstructing the respective intra-predicted block using the fused prediction signal, or
determining, based on the most probable mode syntax element signaled in the data stream for the respective intra predicted block, a principal intra-prediction mode out of the first set of intra prediction modes, and

decoding the respective intra-predicted block using the principal intra-prediction mode.

12. Method for encoding a picture into a data stream, comprising

determining, based on a most probable mode syntax element signaled in the data stream, a principal intra-prediction mode out of a first set of intra prediction modes,
forming a fused prediction signal for an intra-predicted block by fusing a first prediction signal obtained using the principal intra prediction mode and one or more second prediction signals obtained using one or more fusion intra prediction modes;
encoding the intra-predicted block using the fused prediction signal.

13. Apparatus for decoding a picture from a data stream, comprising:

a principal intra-prediction mode determination module configured to determine, based on a most probable mode syntax element signaled in the data stream, a principal intra-prediction mode out of a first set of intra prediction modes,
a fused prediction signal forming module configured to form a fused prediction signal for an intra-predicted block by fusing a first prediction signal obtained using the principal intra prediction mode and one or more second prediction signals obtained using one or more fusion intra prediction modes;
an intra-predicted block reconstructing module configured to reconstruct the intra-predicted block using the final prediction signal.

14. Apparatus for encoding a picture into a data stream, comprising:

a principal intra-prediction mode determination module configured to determine, based on a most probable mode syntax element signaled in the data stream, a principal intra-prediction mode out of a first set of intra prediction modes,
a fused prediction signal forming module configured to form a final prediction signal for an intra-predicted block by fusing a first prediction signal obtained using the principal intra prediction mode and one or more second prediction signals obtained using one or more fusion intra prediction modes;
an intra-predicted block encoding module configured to encode the intra-predicted block using the final prediction signal.

15. Data stream having encoded thereinto a picture, wherein the data stream is encoded using a method according to claim 12.

Fig. 1

Fig. 2

```
                                    ⟨  Start  ⟩
                                         │
                                         ▼
            ┌────────────────────────────────────────────────┐
            │   Compute an RIPM index i for current block     │
            │        (e.g. between 0-66 in VVC)               │
            └────────────────────────────────────────────────┘
                                         │
                                         ▼
            ┌────────────────────────────────────────────────┐
            │         Compute an offset d relative to i       │
            └────────────────────────────────────────────────┘
                                         │
                                         ▼
            ┌────────────────────────────────────────────────┐
            │         Compute the fusion RIPM index as:       │
            │                   f = i + d                     │
            └────────────────────────────────────────────────┘
                                         │
                                         ▼
            ┌────────────────────────────────────────────────┐
            │       Compute predictions signals of i and f    │
            └────────────────────────────────────────────────┘
                                         │
                                         ▼
            ┌────────────────────────────────────────────────┐
            │            Apply fusion on predictions          │
            │                signals of i and f               │
            └────────────────────────────────────────────────┘
                                         │
                                         ▼
                                    ⟨   End   ⟩
```

Fig. 3

Start

Compute an RIPM index *i* for current block
(e.g. between 0-66 in VVC)

Compute a Block Vector (BV) as *bv*

Obtain its corresponding prediction signal
of *bv*

Compute predictions signals of *i* and *bv*

Apply fusion on predictions
signals of *i* and bv

End

Fig. 4

Fig. 5

Determining a principal mode out of a first set of intra prediction modes ———— S102

determining one or more fusion modes out of a second set of intra prediction modes ⟋ S104

forming a final prediction signal for the intra-predicted block by fusing a first prediction signal obtained using the principal mode and one or more second prediction signals obtained using the one or more fusion modes ⟋ S106

Fig. 6

PF2407321EP – final

704

702

encoder

decoder

600

700

500

Fig. 7

Fig. 8

**EUROPEAN SEARCH REPORT**

**Application Number**

EP 24 31 5391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOON (KAU) G ET AL: "Non-EE2: Intra prediction fusion with PMPM list", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0111 ; m60876 22 October 2022 (2022-10-22), XP030304601, Retrieved from the Internet: URL:https://jvet-experts.org/doc_end_user/ documents/28_Mainz/wg11/JVET-AB0111-v3.zip JVET-AB0111-v3.docx [retrieved on 2022-10-22] * pages 1, 2 * | 1-15 | INV. H04N19/11 H04N19/176 H04N19/593 H04N19/70 |
| X | MOON (KAU) G ET AL: "Non-EE2: Intra prediction fusion with PMPM list", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0111 ; m60876 22 October 2022 (2022-10-22), XP030304600, Retrieved from the Internet: URL:https://jvet-experts.org/doc_end_user/ documents/28_Mainz/wg11/JVET-AB0111-v3.zip JVET-AB0111_v1.pptx [retrieved on 2022-10-22] * pages 3-5 * | 1-15 | **TECHNICAL FIELDS SEARCHED (IPC)**<br><br>H04N |

The present search report has been drawn up for all claims

| Place of search | Date of completion of the search | Examiner |
|---|---|---|
| Munich | 10 February 2025 | Di Cagno, Gianluca |

EPO FORM 1503 03.82 (P04C01)